# FASCICULE DE BREVET EUROPEEN

(11) **EP 0 375 481 B1**
(45) Date de publication et mention de la délivrance du brevet: **13.01.1993**
(21) Numéro de dépôt: 89403243.2
(22) Date de dépôt: 23.11.1989
(51) Int. Cl.: B01D 63/06, B01D 69/04, B01D 69/10

(54) **Procédé de fabrication d'un ensemble unitaire de membranes de filtration, moule utilisé et produit ainsi obtenu**
Verfahren zur Herstellung eines einheitlichen Filtrationsmembransatzes, verwendete Form und auf diese Weise hergestelltes Produkt
Process for manufacturing a unified filtration membrane set, used form and product manufactured in this way

(30) Priorité: 23.12.1988 FR 8817075
(43) Date de publication de la demande: 27.06.1990
(73) Titulaire: LYONNAISE DES EAUX - DUMEZ, F-92000 Nanterre (FR)
(72) Inventeur: Espenan, Jean-Michel, 31-33, rue de Touraine F-31100 Toulouse (FR)
(74) Mandataire: Cournarie, Michèle

(56) Documents cités:
- CH-A- 486 256
- DE-A- 2 037 186
- GB-A- 1 168 722
- US-A- 4 038 351

## Description

L'invention concerne un procédé de fabrication par moulage d'un ensemble unitaire de membranes de filtration, le moule utilisé pour ce faire et le produit obtenu.

Les membranes de filtration (ultrafiltration, microfiltration, . . .) classiques sont des membranes tubulaires à paroi poreuse, à peau interne ou externe ou à double peau (la peau désignant une mince pellicule superficielle de plus faible porosité que le reste de la paroi). Ces membranes sont obtenues par extrusion d'une solution de polymère sous forme de fibre creuse et précipitation du polymère (polysulfone par exemple). La fibre creuse continue obtenue est enroulée en écheveau placé ou non dans un manchon perforé et les extrémités de l'écheveau sont empotées dans des plaques de résine servant au montage dans un carter, les extrémités de l'écheveau étant ensuite sectionnées pour le transformer en un faisceau de fibres ouvertes à leurs deux extrémités. Le tout est ensuite monté dans un carter à orifices d'entrée et de sortie pour former un module de filtration.

La fabrication de tels modules est donc longue et nécessite plusieurs étapes comportant entre autres la manipulation de la fibre en cours de formation, avec les risques de rupture que cela implique.

Pour remédier à ces inconvénients, l'invention fournit un procédé de fabrication d'un ensemble unitaire de membranes de filtration obtenues par précipitation d'une solution de polymère, qui consiste à placer dans une enveloppe externe ayant une extrémité fermée et une extrémité ouverte une pluralité d'éléments poreux allongés traversant ladite extrémité fermée avec leurs axes longitudinaux parallèles entre eux et à la direction entre les deux extrémités de l'enveloppe, à injecter autour des éléments poreux la solution de polymère, à injecter à une extrémité des éléments poreux un fluide qui diffuse à travers les éléments poreux vers le polymère et à évacuer à l'autre extrémité le solvant du polymère qui diffuse en sens inverse de façon à faire précipiter le polymère en formant autour des éléments poreux et entre eux une structure polymère poreuse présentant au contact des éléments poreux une peau de porosité réglable, puis à enlever les éléments poreux pour démouler un bloc polymère poreux percé de canaux.

Le ou les fluides et le solvant utilisés sont fonction du type de produit recherché. Le fluide sera généralement un liquide non-solvant qui remplace le solvant et précipite le polymère, ou il pourra également être un gaz qui par balayage provoque l'évaporation du solvant et la concentration progressive du polymère, donc sa précipitation. Deux fluides différents par leur état peuvent être utilisés, par exemple successivement, pour l'élaboration d'un polymère particulier.

L'invention fournit également les moules appropriés, constitués d'une enveloppe externe ayant une extrémité fermée par une plaque perforée et une extrémité ouverte, dans laquelle vient se placer une pluralité d'éléments poreux allongés dont les axes longitudinaux sont parallèles entre eux, qui se prolongent à une extrémité au-delà de l'extrémité fermée de l'enveloppe après passage dans les perforations de la plaque, et qui sont ou non réunis à l'autre extrémité en formant un couvercle de fermeture de l'enveloppe.

Il est aussi fourni un ensemble unitaire de filtration constitué par un bloc polymère poreux moulé percé de canaux venus de moulage dont les axes longitudinaux sont parallèles entre eux, la surface interne des canaux pouvant avoir une porosité déterminée plus faible que celle du bloc polymère.

Les éléments poreux allongés sont des tubes ou des tiges pleines de section quelconque, par exemple circulaire ou hexagonale, pour l'obtention de canaux de section correspondante.

La solution de polymère de départ peut contenir des additifs destinés à régler la formation des pores, en jouant sur le pouvoir solvant du solvant vis-à-vis du polymère, en ayant un certain encombrement, en améliorant l'homogénéité de la solution, selon le type de polymère. On peut faire varier la vitesse de la précipitation en règlant par exemple le débit du fluide injecté et obtenir ainsi les porosités souhaitées. Si le solvant est un solvant lourd, on utilisera généralement de l'eau tandis que si le solvant est volatil, un balayage par un gaz et avantageusement par de l'air suffira à provoquer son évaporation et donc la formation d'un polymère solide.

En utilisant des conditions différentes de précipitation, par exemple des fluides de nature différente plus ou moins précipitante, on peut réaliser des canaux de porosité différente dans le même bloc.

La porosité des éléments est choisie pour que la solution visqueuse de polymère ne pénètre pas dans leur paroi. Par contre ils laissent passer les petites molécules du fluide injecté, ainsi que le solvant et les éventuels additifs.

On peut en outre utiliser des éléments poreux tronconiques, ce qui d'une part facilite le démoulage et d'autre part facilite l'évacuation du gâteau de filtration par rétrolavage du bloc poreux lors de son utilisation en filtration, alors que l'obtention de canaux tronconiques est impossible par la technique classique d'extrusion.

Par ailleurs, comme la solution de polymère est introduite dans un moule et non extrudée, on s'affranchit des conditions étroites de vitesse de précipitation à respecter pour figer la membrane dans la forme que l'extrusion lui a donnée et on peut donc choisir les paramètres de la précipitation pour obtenir la porosité désirée de la structure polymère solide finale.

Le procédé de moulage permet en outre d'utiliser une solution très peu concentrée en polymère de base car la tenue mécanique du bloc obtenu est assurée par une grande épaisseur entre les canaux.

D'autres caractéristiques et avantages de l'invention apparaîtront à la lecture de la description détaillée qui suit, faite en référence aux dessins annexés dans lesquels:
la fig. 1 illustre en coupe et schématiquement un moule de mise en oeuvre du procédé, avant assemblage,
la fig. 2 illustre ce moule assemblé et
la fig. 3 illustre en coupe un bloc polymère poreux percé de canaux selon l'invention.

Le moule utilisé dans le procédé est constitué par une enveloppe externe 1, étanche ou poreuse, de section quelconque, circulaire, carrée, rectangulaire, etc . . . . A sa partie inférieure, l'enveloppe comporte un fond 2 percé d'un orifice d'entrée 3 et de nombreux orifices 4 dans lesquels viennent se loger des tubes poreux 5 (à titre d'exemple des éléments allongés) dont les axes longitudinaux sont disposés parallèlement entre eux. A la partie supérieure, les tubes poreux 5 sont réunis par un couvercle 6 qui ferme l'enveloppe externe 1. Un couvercle n'est cependant pas obligatoire et une grille de maintien des éléments peut suffire, par exemple.

Un orifice latéral 7 est prévu dans l'enveloppe 1 pour évacuer l'air lorsqu'on injecte la solution de polymère dans le moule fermé par un couvercle.

Après assemblage du moule par introduction des tubes 5 dans les orifices 4 et fermeture de la partie supérieure par le couvercle 6, la solution de polymère est injectée dans le moule par l'orifice d'entrée 3, l'air étant purgé par l'orifice 7.

Lorsque le moule est plein, on fait circuler le fluide choisi (l'eau ou un liquide approprié si le solvant du polymère est lourd, l'air ou un gaz inerte s'il s'agit d'un solvant volatil) à l'intérieur des tubes 5 et éventuellement autour de l'enveloppe lorsqu'elle est poreuse. La circulation du fluide peut se faire par injection ou par aspiration, l'entrée du fluide se faisant par les extrémités des tubes qui dépassent du fond du moule, de préférence.

Comme indiqué précédemment, la porosité de ces tubes a été choisie de telle sorte que la solution de polymère ne pénètre pas dans la paroi des tubes. Lorsqu'on fait circuler le fluide, l'eau par exemple, une partie de celle-ci traverse la paroi des tubes tandis que le solvant et les additifs contenus dans la solution de polymère traversent en sens inverse la paroi des tubes et sont évacués par l'intérieur des tubes avec le courant d'eau. Il y a alors précipitation progressive du polymère dans le moule avec formation éventuelle d'une peau autour des tubes.

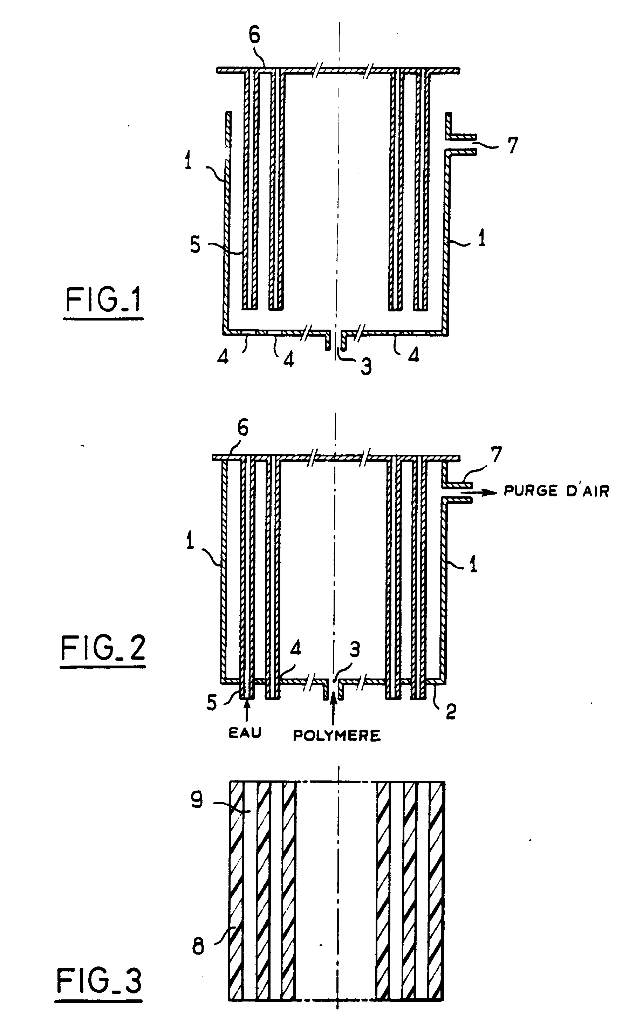

Une fois la précipitation terminée, on désassemble le moule et on obtient un bloc poreux 8 percé de canaux 9 dont les axes longitudinaux sont parallèles entre eux (Fig. 2).

Selon la forme de l'enveloppe externe, le bloc poreux obtenu aura une section circulaire, carrée, rectangulaire, etc . . . . Dans le cas d'une section rectangulaire, on peut obtenir une feuille de faible épaisseur. En outre, on peut réaliser l'enveloppe externe de telle sorte que la feuille obtenue comporte sur l'une ou l'autre ou ses deux surfaces des picots ou bossages qui permettront l'utilisation d'un empilement de ces feuilles comme dans un filtre-presse mais sans espaceurs supplémentaires.

La répartition des éléments allongés dans l'enveloppe et donc celle des canaux dans le bloc poreux peut être choisie à volonté et leur écartement sera déterminé en tenant compte de la concentration du polymère dans la solution pour obtenir la tenue mécanique nécessaire.

L'enveloppe 1 et les éléments 5 sont faits en un matériau inerte vis-à-vis du solvant et n'adhérant pas à la membrane formée pour permettre le démoulage. L'enveloppe peut être en métal, en verre, en matière plastique, etc. Les tubes poreux peuvent être en métal fritté, en verre fritté, céramique, carbone, ... et même être constitués par des membranes tubulaires obtenues par extrusion de Téflon, polypropylène, polyéthylène . . .

Dans le cas où l'on utilise comme éléments poreux des éléments souples, pour éviter d'avoir à les enfiler un à un dans les perforations du fond du moule, il sera possible de les rigidifier soit avec des apprêts poreux soit en y introduisant une fine tige filetée pour ne pas provoquer de perte de charge et assurer un écoulement régulier du liquide de précipitation.

Il est entendu que le procédé de l'invention s'applique à tous les polymères utilisables pour préparer des membranes de filtration.

L'utilisation d'élements poreux tronconiques (non représentée) permet d'obtenir des canaux tronconiques favorables au décolmatage lors des rétrolavages que subit le bloc poreux pendant son utilisation en filtration.

En outre, par insertion d'éléments pleins (tiges) dans des plans perpendiculaires à l'axe des canaux, on peut créer des passages de drainage du produit filtré perpendiculairement à l'axe des canaux, ce qu'il est impossible de réaliser avec le procédé classique d'extrusion.

L'ensemble unitaire de filtration obtenu selon la présente invention est ensuite monté dans un carter pour former un module de filtration. Ou bien on peut s'affranchir du carter en enduisant le pourtour du bloc poreux d'un revêtement étanche, à l'aide par exemple d'une résine thermodurcissable, en prévoyant un passage pour le perméat.

## Revendications

1. Procédé de fabrication d'un ensemble unitaire de membranes de filtration obtenues par précipitation d'une solution de polymère, caractérisé en ce qu'on place dans une enveloppe externe ayant une extrémité fermée et une extrémité ouverte une pluralité d'éléments poreux allongés qui traversent ladite extrémité fermée et dont les axes longitudinaux sont parallèles entre eux et à la direction entre les deux extrémités, on injecte autour des éléments poreux la solution de polymère, on injecte à une extrémité des éléments poreux un fluide qui diffuse à travers les éléments vers le polymère et on évacue à l'autre extrémité des éléments le solvant du polymère qui a diffusé en sens inverse de façon à faire précipiter le polymère en formant autour des éléments poreux et entre eux une structure polymère poreuse présentant au contact des éléments poreux une peau de porosité réglable, puis on enlève les éléments poreux pour démouler un bloc polymère poreux percé de canaux dont les axes longitudinaux sont parallèles entre eux.

2. Procédé selon la revendication 1, caractérisé en ce que le fluide est un liquide.

3. Procédé selon la revendication 1, caractérisé en ce que le fluide est un gaz.

4. Procédé selon la revendication 1, caractérisé en ce qu'on utilise deux fluides d'état différent.

5. Procédé selon l'une des revendications 1 à 4, caractérisé en ce qu'on utilise des fluides différents d'un élément poreux à un autre.

6. Ensemble unitaire de filtration, obtenu par le procédé selon l'une quelconque de revendications 1 à 5, caractérisé en ce qu'il est constitué par un bloc polymère (8) poreux moulé percé de canaux (9) venus de moulage dont les axes longitudinaux sont parallèles entre eux.

7. Ensemble unitaire selon la revendication 6, caractérisé en ce que la surface interne des canaux (9) a une plus faible porosité que le bloc polymère.

8. Ensemble unitaire selon la revendication 6 ou 7, caractérisé en ce qu'il contient des canaux de porosité différente.

9. Ensemble unitaire selon la revendication 6, 7 ou 8, caractérisé en ce que les canaux sont tronconiques.

10. Moules de fabrication d'ensembles unitaires de filtration pour la mise en oeuvre du procédé selon l'une quelconque des revendications 1 à 5, caractérisés en ce qu'ils comportent une enveloppe externe (1) ayant une extrémité fermée (2) et une extrémité ouverte, enveloppe dans laquelle est placée une pluralité d'éléments poreux allongés (5) dont les axes longitudinaux sont parallèles entre eux et à la direction entre les deux extrémités et qui se prolongent à une extrémité au-delà de l'extrémité fermée de l'enveloppe en passant à travers des perforations pratiquées dans l'extrémité fermée (2), ces éléments (5) pouvant être enlevés.

## Patentansprüche

1. Verfahren zum Herstellen einer einheitlichen Gesamtheit von Filtermembranen, die durch Niederschlagen einer Polymerlösung gebildet wird, dadurch gekennzeichnet, daß in ein äußeres Gehäuse mit einem geschlossenen Ende und einem offenen Ende eine Vielzahl länglicher poröser Elemente eingebracht wird, die das geschlossene Ende durchqueren und deren Längsachsen zueinander und zu der Richtung zwischen den beiden Enden parallel sind, daß an einem Ende der porösen Elemente ein Fluid injiziert wird, das durch die Elemente zum Polymer diffundiert, und daß am anderen Ende der Elemente das Lösungsmittel des Polymers, das in umgekehrter Richtung diffundiert ist, abgeführt wird, so daß das Polymer niedergeschlagen wird und dabei um die porösen Elemente und zwischen denselben eine poröse Polymerstruktur gebildet wird, die beim Anliegen an die porösen Elemente eine Haut mit einstellbarer Porosität bildet, und daß dann die porösen Elemente entfernt werden, um durch Entformen einen Block aus porösem Polymerisat zu gewinnen, der von Kanälen durchbohrt ist, deren Längsachsen zueinander parallel sind.

2. Verfahren nach Anspruch 1, dadurch gekennzeichnet, daß das Fluid eine Flüssigkeit ist.

3. Verfahren nach Anspruch 1, dadurch gekennzeichnet, daß das Fluid ein Gas ist.

4. Verfahren nach Anspruch 1, dadurch gekennzeichnet, daß zwei verschiedene Fluide von unterschiedlicher Beschaffenheit verwendet werden.

5. Verfahren nach einem der Ansprüche 1 bis 4, dadurch gekennzeichnet, daß für ein poröses Element ein anderes Fluid verwendet wird als für ein anderes poröses Element.

6. Einheitliche Filtergesamtheit, hergestellt mit dem Verfahren nach einem der Ansprüche 1 bis 5, dadurch gekennzeichnet, daß sie durch einen geformten porösen Polymerisatblock (8) gebildet ist, der von geformten Kanälen (9) durchbohrt ist, deren Längsachsen zueinander parallel sind.

7. Einheitliche Gesamtheit nach Anspruch 6, dadurch gekennzeichnet, daß die innere Oberfläche der Kanäle (9) eine geringere Porosität aufweist als der Polymerisatblock.

8. Einheitliche Gesamtheit nach Anspruch 6 oder 7, dadurch gekennzeichnet, daß sie Kanäle mit unterschiedlicher Porosität aufweist.

9. Einheitliche Gesamtheit nach Anspruch 6, 7 oder 8, dadurch gekennzeichnet, daß die Kanäle kegelstumpfförmig sind.

10. Herstellungsformen für einheitliche Filtergesamtheiten zur Verwendung beim Verfahren nach einem der Ansprüche 1 bis 5, dadurch gekennzeichnet, daß sie ein äußeres Gehäuse (1) mit einem geschlossenen Ende (2) und einem offenen Ende aufweist, in das eine Vielzahl länglicher poröser Elemente (5) eingesetzt ist, deren Längsachsen parallel zueinander und zur Richtung zwischen den beiden Enden sind und die sich an einem Ende bis über das geschlossene Ende des Gehäuses erstrecken und dabei durch eine Lochung hindurchgehen, die im geschlossenen Ende (2) angebracht ist, wobei die Elemente (5) herausgenommen werden können.

## Claims

1. Process for the production of a unitary assembly of filtration diaphragms obtained by the precipitation of a polymer solution, characterized in that in an outer envelope having a closed end and an open end is placed a plurality of elongated porous elements, which traverse the said closed end and whose longitudinal axes are parallel to one another and to the direction between the two ends, around the porous elements is injected the polymer solution, at one end of the porous elements is injected a fluid which diffuses through the elements towards the polymer and at the other end of the elements evacuation takes place of the polymer solvent which has diffused in the reverse direction so as to bring about the precipitation of the polymer, forming around the porous elements and between them a porous polymer structure having, on contact with the porous elements, a skin of regulatable porosity, followed by the removal of the porous elements in order to remove from the mould a porous polymer block having channels, whose longitudinal axes are parallel to one another.

2. Process according to claim 1, characterized in that the fluid is a liquid.

3. Process according to claim 1, characterized in that the fluid is a gas.

4. Process according to claim 1, characterized in that two fluids with different states are used.

5. Process according to one of the claims 1 to 4, characterized in that use is made of different fluids between individual porous elements.

6. Unitary filtration assembly obtained by the process according to any one of the claims 1 to 5, characterized in that it is constituted by a moulded, porous polymer block (8) having channels (9) resulting from the moulding process and whose longitudinal axes are parallel to one another.

7. Unitary assembly according to claim 6, characterized in that the inner surface of the channels (9) has a lower porosity than the polymer block.

8. Unitary assembly according to claims 6 or 7, characterized in that it contains channels having different porosities.

9. Unitary assembly according to claims 6,7 or 8, characterized in that the channels are truncated cone-shaped.

10. Moulds for the production of unitary filtration assemblies for performing the process according to any one of the claims 1 to 5, characterized in that they have an outer envelope (1) having a closed end (2) and an open end and in said envelope is placed a plurality of elongated porous elements (5), whose longitudinal axes are parallel to one another and to the direction between the two ends and which are extended at one end beyond the closed end of the envelope passing through perforations made in the closed end (2), whereby said elements (5) can be removed.
